# EUROPEAN PATENT APPLICATION

(11) **EP 4 825 994 A1**
(43) Date of publication of application: **21.10.2026**
(21) Application number: 24904293.8
(22) Date of filing: 13.12.2024
(51) Int. Cl.: C21D 8/12, C22C 38/02, C22C 38/06, C22C 38/04, C22C 38/00, C22C 38/34, H01F 1/147

(54) **ANNEALING SEPARATING AGENT COMPOSITION FOR GRAIN ORIENTED ELECTRICAL STEEL SHEET, GRAIN ORIENTED ELECTRICAL STEEL SHEET AND METHOD FOR MANUFACTURING SAME**

(30) Priority: 15.12.2023 KR 20230183837
(71) Applicant: POSCO Co., Ltd, Gyeongsangbuk-do 37859 (KR)
(72) Inventor: Lee, Donggyu, Pohang-si, Gyeongsangbuk-do 37859 (KR); Kwon, Min Serk, Pohang-si, Gyeongsangbuk-do 37859 (KR); Choi, Heonjo, Pohang-si, Gyeongsangbuk-do 37859 (KR); No, Taeyoung, Pohang-si, Gyeongsangbuk-do 37859 (KR); Park, Gyeongryeol, Pohang-si, Gyeongsangbuk-do 37859 (KR)
(74) Representative: Meissner Bolte Partnerschaft mbB
(86) International application number: PCT/KR2024/020333
(87) International publication number: WO 2025/127728

(57) **Abstract**

An annealing separator composition according to an embodiment of the present invention comprises 5 to 80 parts by weight of a nano magnesium compound having a particle size of less than 0.8 µm and an average particle diameter of 1 to 200 nm, and 5 to 80 parts by weight of a micro magnesium compound having a particle size of 0.8 µm or more and an average particle diameter of 1 to 200 µm, wherein the magnesium compound comprises at least one of magnesium oxide and magnesium hydroxide.

## Description

### [Technical Field]

An embodiment of the present invention relates to an annealing separator composition for a grain-oriented electrical steel sheet, a grain-oriented electrical steel sheet, and a method for manufacturing the same. Specifically, an embodiment of the present invention relates to a grain-oriented electrical steel sheet in which magnetic properties are improved by appropriately controlling the particle size of a magnesium compound in an annealing separator to form an appropriate forsterite coating aggregate near a forsterite coating, and a method for manufacturing the same.

### [Background Art]

In general, a grain-oriented electrical steel sheet refers to an electrical steel sheet that contains a Si component in a steel sheet and has a texture in which the orientation of crystal grains is aligned in the {110}<001> direction, thereby having extremely excellent magnetic properties in the rolling direction.

Although grain-oriented electrical steel sheets are intended to improve core loss and achieve an effect of reducing noise caused by magnetostriction by forming an insulating coating on a forsterite (Mg₂SiO₄) based base coating and imparting tensile stress to the steel sheet using a difference in thermal expansion coefficients between the insulating coating and the steel sheet, there are limitations in satisfying the property levels required for recent high-grade grain-oriented electrical steel sheets.

Accordingly, in a manufacturing process of a grain-oriented electrical steel sheet, there has been proposed a method for improving surface characteristics by adding TiO₂ powder to MgO in a step of applying an annealing separator comprising MgO as a main component to improve forsterite coating characteristics.

In addition, to improve film tension, a method has been proposed in which kaolinite (Al₄Si₄O₁₀(OH)₈) is applied as an annealing separator on the surface of a decarburized annealed sheet and final annealing is performed to form a composite coating comprising alumina and silica on the surface of the steel sheet. However, this method is a technique for forming a dual-structure composite coating in which an upper portion consists of alumina and a lower portion consists of silica by decomposing kaolinite, which makes it difficult to control the secondary recrystallization annealing process and to achieve uniform quality, and there is a problem of inferior adhesion due to the silica coating formed at the bottom.

In addition, as a method for improving the core loss of a grain-oriented electrical steel sheet, a method is known in which a forsterite coating is removed by applying alumina powder or a mixture of colloidal silica and MgCl₂ as an annealing separator. However, the above method has a problem in that the core loss of the electrical steel sheet rather deteriorates as the forsterite coating is removed, and it is difficult to form an insulating coating in a subsequent process.

### [Disclosure]

### [Technical Problem]

An embodiment of the present invention provides an annealing separator composition for a grain-oriented electrical steel sheet, a grain-oriented electrical steel sheet, and a manufacturing method thereof. Specifically, an embodiment of the present invention provides a grain-oriented electrical steel sheet in which magnetic properties are improved by appropriately controlling the particle size of a magnesium compound in an annealing separator to form an appropriate forsterite coating aggregate in the vicinity of a forsterite coating, and a manufacturing method thereof.

### [Technical Solution]

An annealing separator composition according to an embodiment of the present invention comprises 5 to 80 parts by weight of a nano magnesium compound having a particle size of less than 0.8 µm and an average particle diameter of 1 to 200 nm, and 5 to 80 parts by weight of a micro magnesium compound having a particle size of 0.8 µm or more and an average particle diameter of 1 to 200 µm, wherein the magnesium compound comprises at least one of magnesium oxide and magnesium hydroxide.

The magnesium compound may be included in an amount of 50 to 95 parts by weight based on 100 parts by weight of a total solid content of the annealing separator.

The weight ratio of the nano magnesium compound to the micro magnesium compound may be 5:80 to 60:25 (nano magnesium : micro magnesium).

The annealing separator composition according to an embodiment of the present invention may further comprise at least one of a metal hydroxide, a ceramic powder, and a sulfate compound.

A grain-oriented electrical steel sheet according to an embodiment of the present invention comprises a grain-oriented electrical steel sheet substrate and a coating disposed on one side or both sides of the grain-oriented electrical steel sheet substrate and comprising forsterite.

In a grain-oriented electrical steel sheet according to an embodiment of the present invention, in a cross-sectional area having a width of 25 µm including the steel sheet width and thickness directions, a total area of forsterite aggregates independent from an interface between a coating and a substrate is 3.2 to 7.5 µm², and an average area of the forsterite aggregates is 0.1 to 1.2 µm².

The total area of the forsterite aggregate may be 4.0 to 6.5 µm².

The average area of the forsterite aggregates may be 0.2 to 0.9 µm².

The number ratio of forsterite aggregates having a ratio of the minor axis to the major axis of 0.5 or more among the forsterite aggregates may be 0.38 to 0.95.

The forsterite aggregate may be present in a region (A) of 2 to 5 µm in the thickness direction of the steel sheet from the coating surface.

The peak position of Mg content obtained when elemental analysis is performed by a Glow Discharge Spectrometer (GDS) analysis method in the thickness direction of the grain-oriented electrical steel sheet from the coating surface may be formed at 0.7 to 1.0 µm in the thickness direction of the grain-oriented electrical steel sheet from the coating surface.

The grain-oriented electrical steel sheet according to an embodiment of the present invention may have an oxidation amount of 925 to 1100 ppm.

The coating may have a peeling adhesion of 5 to 8 N, as measured by an ASTM C1624 scratch tester.

The grain-oriented electrical steel sheet substrate may comprise 2.0 to 7.0 wt% of silicon (Si), 0.020 to 0.040 wt% of aluminum (Al), 0.01 to 0.20 wt% of manganese (Mn), 0.01 to 0.15 wt% of phosphorus (P), 0.01 wt% or less (excluding 0%) of carbon (C), 0.005 to 0.05 wt% of nitrogen (N), and 0.01 to 0.15 wt% of antimony (Sb), tin (Sn), and a combination thereof, with the balance being iron (Fe) and other unavoidable impurities.

The grain-oriented electrical steel sheet substrate may further include at least one of 0.40 wt% or less of copper (Cu), 0.001 wt% or less of sulfur (S), and 0.01 to 0.2 wt% of chromium (Cr).

A method for manufacturing a grain-oriented electrical steel sheet according to an embodiment of the present invention comprises the steps of: hot rolling a steel slab to manufacture a hot-rolled sheet; cold rolling the hot-rolled sheet to manufacture a cold-rolled sheet; performing primary recrystallization annealing on the cold-rolled sheet; applying an annealing separator composition on a surface of the primary recrystallization annealed steel sheet; and performing secondary recrystallization annealing on the steel sheet on which the annealing separator composition is applied.

The annealing separator composition comprises 5 to 80 parts by weight of a nano magnesium compound having a particle size of less than 0.8 µm and an average particle diameter of 1 to 200 nm, and 5 to 80 parts by weight of a micro magnesium compound having a particle size of 0.8 µm or more and an average particle diameter of 1 to 200 µm, wherein the magnesium compound includes at least one of magnesium oxide and magnesium hydroxide.

In the primary recrystallization annealing step, the dew point may be 58 to 70 °C.

The secondary recrystallization annealing step comprises a first soaking stage having a soaking temperature of 650 to 750 °C and a second soaking stage having a soaking temperature of 1100 to 1250 °C, and heating may be performed at a heating rate of 10 to 20 °C/hr between the first soaking stage and the second soaking stage.

### [Advantageous Effects]

A grain-oriented electrical steel sheet according to an embodiment of the present invention may reduce magnetic deviation in the width direction of the steel sheet and may uniformly obtain magnetic improvement in the width direction of the steel sheet.

### [Brief Description of the Drawings]

Fig. 1 is a schematic view schematically showing a cross section of a grain-oriented electrical steel sheet according to an embodiment of the present invention.
Fig. 2 is a schematic view schematically showing a cross section of a grain-oriented electrical steel sheet according to another embodiment of the present invention.
Fig. 3 shows the results of analyzing Mg content by GDS analysis.

### [Mode for Invention]

Terms such as first, second and third are used to describe various parts, components, regions, layers and/or sections, but are not limited thereto. These terms are only used to distinguish one part, component, region, layer or section from another part, component, region, layer or section. Accordingly, a first part, component, region, layer or section described below may be referred to as a second part, component, region, layer or section without departing from the scope of the present invention.

The terminology used herein is for the purpose of referring to specific embodiments only and is not intended to limit the present invention. As used herein, the singular forms include the plural forms as well unless the context clearly indicates otherwise. The meaning of "comprising" as used in the specification specifies a specific characteristic, region, integer, step, operation, element and/or component, and does not exclude the presence or addition of another characteristic, region, integer, step, operation, element and/or component.

When a part is referred to as being "above" or "on" another part, it may be directly above or on the other part, or another part may be interposed therebetween. In contrast, when a part is referred to as being "directly above" another part, no other part is interposed therebetween.

Unless defined otherwise, all terms including technical and scientific terms used herein have the same meaning as commonly understood by one of ordinary skill in the art to which the present invention belongs. Terms defined in commonly used dictionaries are further interpreted as having a meaning consistent with the related technical documents and the currently disclosed content, and are not interpreted in an ideal or very formal sense unless defined otherwise.

In addition, unless otherwise specified, % refers to weight %, and 1 ppm is 0.0001 weight %.

In an embodiment of the present invention, the phrase "further including an additional element" means that the additional element is included by replacing the balance of iron (Fe) in an amount corresponding to the added amount of the additional element.

Hereinafter, embodiments of the present invention will be described in detail so that those of ordinary skill in the art to which the present invention pertains can easily practice the invention. However, the present invention may be implemented in various different forms and is not limited to the embodiments described herein.

An annealing separator composition according to an embodiment of the present invention comprises 5 to 80 parts by weight of a nano-magnesium compound having a particle size of less than 0.8 µm and an average particle size of 1 to 200 nm, and 5 to 80 parts by weight of a micro-magnesium compound having a particle size of 0.8 µm or more and an average particle size of 1 to 200 µm, wherein the magnesium compound comprises at least one selected from the group consisting of magnesium oxide and magnesium hydroxide.

Hereinafter, an annealing separator composition according to an embodiment of the present invention will be described in detail for each component.

In one embodiment of the present invention, parts by weight refers to a relative weight ratio with respect to the total solid content of the annealing separator composition. Solid content refers to the components remaining after removing volatile components such as solvents from the annealing separator composition.

An annealing separator composition according to an embodiment of the present invention comprises 5 to 80 parts by weight of a nano magnesium compound having a particle size of less than 0.8 µm and an average particle size of 1 to 200 nm.

When the nano magnesium compound is included in an amount that is too small, the penetration of the magnesium compound into the base metal may not be effectively performed, so that forsterite aggregates are not sufficiently formed and forsterite film formation is not sufficient, which may result in poor adhesion. In addition, the ability to impart film tension and the improvement of insulation properties may be insufficient. When the nano magnesium compound is included in an amount that is too large, the annealing separator coated with the nano magnesium compound may fall off from the surface of the material before annealing, so that the overall physical properties of the coating may be poor. Therefore, the nano magnesium compound may be included in the aforementioned content range. More specifically, 20 to 70 parts by weight of the nano magnesium compound may be included.

The average particle diameter of the nano magnesium compound may be 1 to 200 nm. When the average particle diameter of the nano magnesium compound is too small, a tendency of the nano magnesium compound particles to aggregate with each other becomes stronger, and thus the advantages of being nanoparticles may not be utilized. When the average particle diameter of the nano magnesium compound is too large, the influence on the size distribution of conventional magnesium compounds may be insignificant, and the ability to impart coating tension and improvement of insulation properties through the addition of the nano magnesium compound may be insufficient. More specifically, the average particle diameter may be 20 to 200 nm. The average particle diameter of the nano magnesium compound may be measured through a gas adsorption method (BET) in a dry state. In an embodiment of the present invention, the average particle diameter is separately measured for particles having a particle diameter of less than 0.8 µm.

An annealing separator composition according to an embodiment of the present invention comprises 5 to 80 parts by weight of a micro magnesium compound having a particle size of 0.8 µm or more and an average particle size of 1 to 200 µm. When the micro magnesium compound is included in an amount that is too small, the relative amount of a nano magnesium compound increases, and as an aggregation phenomenon between the nano magnesium compounds increases, the applied annealing separator may fall off from a surface of a material before annealing. When the micro-magnesium compound is included in an amount that is too large, diffusion of the magnesium compound into a base material layer does not easily occur and a forsterite aggregate is not well formed, such that coating tension imparting ability and insulation property improvement may be insufficient. More specifically, the micro magnesium compound may be included in an amount of 20 to 70 parts by weight.

An average particle diameter of the micro magnesium compound is 1 to 200 µm. When the average particle diameter of the micro magnesium compound is too small, an aggregation phenomenon between nano magnesium compounds increases, similar to when the amount of nano magnesium compounds increases, such that the applied annealing separator may fall off from the surface of a material before annealing. When the average particle diameter of the micro magnesium compound is too large, diffusion of the magnesium compound into a base metal layer does not easily occur and a forsterite aggregate is not well formed, so that film tension imparting ability and insulation properties may be deteriorated. More specifically, the average particle diameter of the micro magnesium compound may be 5 to 150 µm.

The magnesium compound may include at least one of magnesium oxide (MgO) and magnesium hydroxide (Mg(OH)₂). In an embodiment of the present invention, the annealing separator composition may exist in a slurry form for easy application to a surface of a grain-oriented electrical steel substrate. When water is included as a solvent for the slurry, the magnesium oxide is easily dissolved in water and may exist in the form of magnesium hydroxide. Therefore, in an embodiment of the present invention, magnesium oxide and magnesium hydroxide are treated as one component.

The magnesium compound may be included in an amount of 50 to 95 parts by weight based on 100 parts by weight of the total solid content of the annealing separator. If the amount of the magnesium compound is too small, Mg for forsterite formation may be insufficient. If the amount of the magnesium compound is too large, the reactivity of the magnesium compound may deteriorate, such that the forsterite aggregate may not be properly formed. More specifically, the magnesium compound may be included in an amount of 75 to 90 parts by weight based on 100 parts by weight of the total solid content of the annealing separator.

A weight ratio of the nano magnesium compound to the micro magnesium compound may be 5:80 to 60:25 (nano magnesium : micro magnesium). As described above, if the weight ratio is not appropriately adjusted, magnesium aggregates may not be properly formed, and coating properties may be deteriorated. More specifically, the weight ratio of the nano magnesium compound to the micro magnesium compound may be 20:65 to 50:35 (nano magnesium : micro magnesium).

An annealing separator composition according to an embodiment of the present invention may further include at least one of a metal hydroxide, a ceramic powder, and a sulfate compound.

Metal hydroxides have a lower melting point, which lowers the coating formation temperature in the secondary recrystallization annealing process, so that surface characteristics of good quality may be secured. In addition, the forsterite coating formed in a low temperature range has an effect of suppressing decomposition of AlN-based inhibitors having a decisive influence on secondary recrystallization formation, and thus excellent magnetic quality may be secured.

In an embodiment of the present invention, the annealing separator composition may include 0.1 to 20 parts by weight of a metal hydroxide. When the metal hydroxide is included in too small an amount, a problem may occur in sufficiently exhibiting the aforementioned effects. When the metal hydroxide is included in too large an amount, the metal component diffuses into the interior to form a film, which may cause a problem in that forsterite formation behavior becomes non-uniform.

In this case, the metal hydroxide refers to a metal hydroxide excluding the aforementioned magnesium hydroxide. Specifically, the metal hydroxide may include at least one selected from the group consisting of Cr(OH)₃, Ni(OH)₂, Co(OH)₂, Cu(OH)₂, Sr(OH)₂, Ba(OH)₂, Pd(OH)₂, In(OH)₃, Bi(OH)₃, and Sn(OH)₂.

An annealing separator composition according to an embodiment of the present invention may include 0.5 to 10 parts by weight of a ceramic powder. The ceramic powder may include at least one selected from the group consisting of MnO, Al₂O₃, SiO₂, TiO₂, and ZrO₂. When an appropriate amount of the ceramic powder is further included, the insulation properties of the formed film may be further improved.

An annealing separator composition according to an embodiment of the present invention may comprise 0.5 to 10 parts by weight of a sulfate compound. When the sulfate compound is included in an appropriate amount, a grain-oriented electrical steel sheet having excellent surface gloss and very beautiful roughness may be manufactured. The sulfate compound may comprise at least one of Sb₂(SO₄)₃, SrSO₄, and BaSO₄.

The annealing separator composition may further include a solvent for uniform dispersion and easy application of solids. Water, alcohol, or the like may be used as the solvent, and the solvent may be included in an amount of 300 to 1000 parts by weight based on 100 parts by weight of the solid content. As such, the annealing separator composition may be in the form of a slurry.

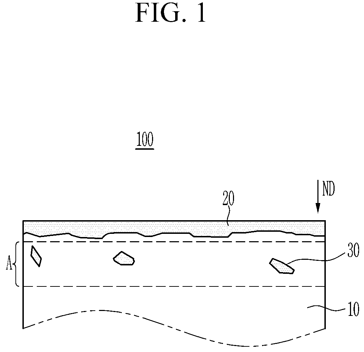

Fig. 1 schematically illustrates a cross-section of a grain-oriented electrical steel sheet 100 according to an embodiment of the present invention.

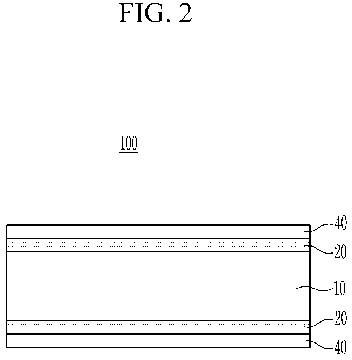

As shown in Fig. 1, a grain-oriented electrical steel sheet 100 according to an embodiment of the present invention includes a grain-oriented electrical steel sheet substrate 10 and a coating 20 including forsterite and disposed on one surface or both surfaces of the grain-oriented electrical steel sheet substrate 10. Fig. 1 illustrates that the coating 20 is disposed on one surface; however, as shown in Fig. 2, it is also possible for the coating 20 to be disposed on both surfaces, in which case the grain-oriented electrical steel sheet substrate 10 is disposed between the coatings 20. Fig. 1 is an example of the grain-oriented electrical steel sheet 100 according to an embodiment of the present invention, and may further include additional configurations in addition to the configurations represented in Fig. 1. For example, as shown in Fig. 2, it is also possible to further include a ceramic coating (40, or an insulation coating) disposed on a surface of the coating 20.

The coating 20 comprising forsterite is formed by a chemical reaction between an internal oxide layer (SiO₂) present on the surface of the steel sheet and magnesium oxide (MgO) in the annealing separator during secondary recrystallization annealing.

In addition, as shown in Fig. 1, a forsterite aggregate 30 independent of an interface between the coating 20 and the grain-oriented electrical steel substrate 10 exists inside the grain-oriented electrical steel substrate 10. The forsterite aggregate 30 is formed by a part of the coating 20 penetrating into the interior of the substrate 10. The forsterite aggregate 30 exists independently of the coating 20, and a case where it is connected to the coating 20 without being separated therefrom is not regarded as the forsterite aggregate 30. The coating 20 and the forsterite aggregate 30 are distinguished from the grain-oriented electrical steel substrate 10 in that Mg and O are concentrated in SEM-EDS mapping. Since a measurable area of SEM is localized, at least five or more locations are measured to derive an average value. In one embodiment of the present invention, by appropriately forming the coating 20 and the forsterite aggregate, the ability to impart coating adhesion and insulation properties are further improved.

As shown in Fig. 1, in a cross-sectional area including a steel sheet width of 25 µm (the horizontal direction in Fig. 1) and a thickness direction (ND direction, the vertical direction in Fig. 1), the total area of forsterite aggregates 30 may be 3.2 to 7.5 µm². The total area of the forsterite aggregates 30 is the total sum of areas of forsterite present in the corresponding area. If the area of the forsterite aggregates 30 is too small, a problem may occur in which coating tension imparting ability and adhesion are deteriorated. If the area of the forsterite aggregates 30 is too large, it may be problematic because core loss is inferior. More specifically, the total area of the forsterite aggregates 30 may be 4.0 to 6.5 µm².

As shown in Fig. 1, in a cross-sectional area including a width and thickness direction of the steel sheet of 25 µm, an average area of the forsterite aggregates 30 may be 0.1 to 1.2 µm². The average area of the forsterite aggregates 30 is an average area per number of the forsterite aggregates 30, and is a value obtained by dividing a total area of the forsterite aggregates 30 by the total number thereof. If the average area of the forsterite aggregates 30 is too small, core loss may be poor, which may be problematic. If the average area of the forsterite aggregates 30 is too large, coating tension-imparting ability and adhesion may be deteriorated, which may be problematic. More specifically, the average area of the forsterite aggregates 30 may be 0.2 to 0.9 µm².

The forsterite aggregates 30 may exist in various forms, and a ratio of the number of forsterite aggregates having a ratio of a short axis to a long axis of 0.5 or more may be 0.38 to 0.95 among the total forsterite aggregates 30. The long axis refers to the longest axis among axes passing through the forsterite aggregate 30, and the short axis refers to the shortest axis among axes passing through a center of the forsterite aggregate 30. The forsterite aggregates formed by a nano magnesium compound tend to have a higher ratio of the number of forsterite aggregates having a ratio of the short axis to the long axis of 0.5 or more than the forsterite aggregates formed by a micro magnesium compound. When there are many forsterite aggregates 30 having a ratio of the short axis to the long axis of 0.5 or more, an average area per particle is small and a surface area is large, which is advantageous in terms of coating tension providing ability and adhesion improvement. If the number of forsterite aggregates 30 having a ratio of the short axis to the long axis of 0.5 or more is too small, there may be a problem in terms of coating tension providing ability and adhesion improvement. If the number of forsterite aggregates 30 having a ratio of the short axis to the long axis of 0.5 or more is too large, there may be a problem in terms of iron loss. More specifically, the ratio of the number of forsterite aggregates 30 having a ratio of the short axis to the long axis of 0.5 or more may be 0.5 to 0.9.

The forsterite aggregate 30 may be present in a region (A) of 2 to 5 µm from a surface of the coating in a thickness direction of the steel sheet. A region of less than 2 µm is the coating 20 or a portion connected to the coating 20, and it is difficult to form the forsterite aggregate 30 by penetrating so as to exceed 5 µm.

The coating 20 may have a thickness of 0.1 to 5 µm. If the thickness of the coating 20 is too thin, the coating tension imparting ability and adhesion may deteriorate, and a problem of inferior core loss may occur. If the thickness of the coating 20 is too thick, the stacking factor may decrease, and a problem of inferior transformer characteristics may occur. Therefore, the thickness of the forsterite coating 20 may be adjusted within the aforementioned range. More specifically, the thickness of the forsterite coating 20 may be 0.8 to 4 µm. The boundary between the coating 20 and the steel sheet substrate 10 may be distinguished into the coating 20 containing 5 wt% or more of Mg and a portion containing less than 5 wt% of Mg in the thickness direction of the steel sheet. Even when a ceramic coating 40 is further formed on the coating 20, it may be distinguished into the coating 20 containing 5 wt% or more of Mg and the ceramic coating 40 containing less than 5 wt% of Mg based on 5 wt% of Mg.

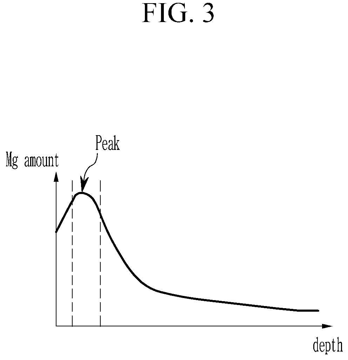

As shown in Fig. 3, when elemental analysis is performed by a glow discharge spectrometer (GDS) analysis method from a surface of a coating 20 in a thickness direction of a grain-oriented electrical steel sheet, a peak position of Mg content obtained may be formed at 0.7 to 1.0 µm from the surface of the coating in the thickness direction of the grain-oriented electrical steel sheet.

The peak position refers to the position of an inflection point where the Mg content graph increases and then decreases. This position is the position of the maximum value of the Mg content. In one embodiment of the present invention, a coating layer having an appropriate thickness may be formed by forming the peak position of the Mg content at an appropriate position. If the peak position of the Mg content is too low, the thickness of the coating layer may be thin, which may be a problem. If the peak position is too high, the thickness of the coating layer may be thick, which may be a problem. More specifically, the peak position of the Mg content may be formed at 1 to 4 µm from the surface of the coating in the thickness direction of the grain-oriented electrical steel. In a case where a ceramic coating 40 additionally exists on the coating 20, the peak position may be determined after the ceramic coating 40 is removed.

The grain-oriented electrical steel according to an embodiment of the present invention may have an oxidation amount of 900 to 1200 ppm. The oxidation amount refers to a content ratio of O included in the material. If the oxidation amount is too small, silicon oxide to react with a magnesium compound may be insufficient, and thus forsterite formation may not be smooth, which may cause a problem. If the oxidation amount is too large, a problem may occur in that it is difficult for the magnesium compound to penetrate into the base metal, which may cause a problem in terms of forsterite formation. More specifically, the oxidation amount may be 925 to 1100 ppm. The oxidation amount may be measured by an elemental analyzer.

As described above, by appropriately forming the coating layer 20 and the forsterite aggregate 30, the adhesion of the coating layer 20 may be further improved. More specifically, the coating layer 20 may have a peeling adhesion of 5 to 8 N through an ASTM C1624 scratch tester. A scratch tester is a device that evaluates peeling adhesion by moving a tip on a specimen while gradually increasing the load to generate a scratch on the specimen surface, and then reading the load (N) at the point where peeling of the coating layer occurs (ASTM C1624). Peeling of the coating layer may occur in various forms such as buckling spallation, wedging spallation, recovery spallation, and chipping. Among these, the coating adhesion may be measured based on the first point where the peeling width due to buckling spallation occurs as wide as the scratch width. More specifically, the coating layer 20 may have a peeling adhesion of 6 to 7 N through the ASTM C1624 scratch tester.

In the grain-oriented electrical steel sheet 100 according to an embodiment of the present invention, a ceramic coating 40 may be further formed on the coating 20. Fig. 2 illustrates an embodiment further including the ceramic coating 40 positioned on the coating 20.

The thickness of the ceramic coating 40 may be 0.5 to 5 µm. If the thickness of the ceramic coating 40 is too thin, a problem may occur in that the insulation effect of the ceramic coating 40 is reduced. If the thickness of the ceramic coating 40 is too thick, the adhesion of the ceramic coating 40 may decrease, and peeling may occur. Accordingly, the thickness of the ceramic coating 40 may be adjusted within the aforementioned range. More specifically, the thickness of the ceramic coating 40 may be 0.8 to 3.2 µm.

The ceramic coating 40 may comprise ceramic powder. The ceramic powder may be at least one selected from the group consisting of Al₂O₃, SiO₂, TiO₂, ZrO₂, Al₂O₃·TiO₂, Y₂O₃, 9Al₂O₃·2B₂O₃, BN, CrN, BaTiO₃, SiC, and TiC. A particle diameter of the ceramic powder may be 2 to 900 nm. If the particle diameter of the ceramic powder is too small, formation of a ceramic layer may become difficult. If the particle diameter of the ceramic powder is too large, surface roughness may become coarse and surface defects may occur. Therefore, the particle diameter of the ceramic powder may be adjusted to the aforementioned range.

The ceramic powder may have one or more shapes selected from the group consisting of a spherical shape, a plate-like shape, and a needle-like shape.

The ceramic coating 40 may further comprise a metal phosphate. The metal phosphate may comprise at least one selected from the group consisting of Mg, Ca, Ba, Sr, Zn, Al, and Mn. When further comprising the metal phosphate, the insulation property of the ceramic coating 40 is further improved.

The metal phosphate may consist of a compound formed by a chemical reaction between a metal hydroxide and phosphoric acid (H₃PO₄).

The metal phosphate is composed of a compound formed by a chemical reaction between a metal hydroxide and phosphoric acid (H₃PO₄), and the metal hydroxide may be at least one selected from the group consisting of Ca(OH)₂, Al(OH)₃, Mg(OH)₂, B(OH)₃, Co(OH)₂, and Cr(OH)₃.

Specifically, metal atoms of the metal hydroxide may be formed by reacting with phosphorus of phosphoric acid through a substitution reaction to form a single bond, a double bond, or a triple bond, and may consist of a compound in which an amount of unreacted free phosphoric acid (H₃PO₄) is 25 wt% or less.

The metal phosphate is composed of a compound resulting from a chemical reaction between a metal hydroxide and phosphoric acid (H₃PO₄), and a weight ratio of the metal hydroxide to the phosphoric acid may be expressed as being 1:100 to 40:100.

When the metal hydroxide is included in an excessively large amount, a chemical reaction may not be completed, which may cause a problem of forming precipitates. When the metal hydroxide is included in an excessively small amount, a problem of inferior corrosion resistance may occur. Therefore, the range may be limited as described above.

In one embodiment of the present invention, the effect is exhibited by the characteristics of the annealing separator composition and the coating 20 regardless of the components of the grain-oriented electrical steel sheet substrate 10. Supplementarily, the components of the grain-oriented electrical steel sheet substrate 10 are described as follows.

The grain-oriented electrical steel substrate 10 may comprise 2.0 to 7.0 wt% of silicon (Si), 0.020 to 0.040 wt% of aluminum (Al), 0.01 to 0.20 wt% of manganese (Mn), 0.01 to 0.15 wt% of phosphorus (P), 0.01 wt% or less of carbon (C) (excluding 0%), 0.005 to 0.05 wt% of N, and 0.01 to 0.15 wt% of a component of antimony (Sb), tin (Sn), and a combination thereof, and the balance may comprise Fe and other unavoidable impurities.

Hereinafter, the reasons for limiting the components of the grain-oriented electrical steel sheet substrate 10 will be described.

### Si: 2.0 to 7.0 wt %

Silicon (Si) serves to reduce core loss by increasing the resistivity of steel. In a case where the content of Si is too low, the resistivity of the steel becomes low, which deteriorates core loss characteristics, and a phase transformation region exists during high-temperature annealing, which may cause a problem of unstable secondary recrystallization. In a case where the content of Si is too high, a problem may occur in which cold rolling becomes difficult due to increased brittleness. Therefore, the content of Si may be controlled within the aforementioned range. More specifically, Si may be included in an amount of 3.0 to 4.0 wt%.

### Al: 0.020 to 0.040 wt%

Aluminum (Al) is a component that finally forms nitrides in the form of AlN, (Al,Si)N, and (Al,Si,Mn)N and acts as an inhibitor. When the content of Al is too low, it is difficult to expect a sufficient effect as an inhibitor. In addition, when the content of Al is too high, Al-based nitrides precipitate and grow too coarsely, so that the effect as an inhibitor may be insufficient. Therefore, the content of Al may be controlled within the aforementioned range. More specifically, it may include 0.025 to 0.035 wt%.

### Mn: 0.01 to 0.20 wt%

Manganese (Mn) has an effect of increasing resistivity and reducing core loss in the same manner as Si, and is an important element for inducing secondary recrystallization by reacting with nitrogen introduced through nitriding along with Si to form (Al, Si, Mn)N precipitates, thereby inhibiting the growth of primary recrystallized grains. However, if the Mn content is too high, it promotes austenite phase transformation during hot rolling, thereby reducing the size of primary recrystallized grains and making secondary recrystallization unstable. In addition, if the Mn content is too low, as an austenite-forming element, the effect of increasing the austenite fraction during hot rolling reheating to increase the solid solution amount of precipitates, thereby preventing the primary recrystallized grains from becoming excessively large through refinement of precipitates and MnS formation during re-precipitation, may occur insufficiently. Therefore, the Mn content may be adjusted within the aforementioned range. More specifically, it may be included in an amount of 0.03 to 0.10 wt%.

### P: 0.01 to 0.15 wt %

Phosphorus (P) promotes the growth of primary recrystallized grains and thus increases the secondary recrystallization temperature, serving to increase the degree of integration of the {110}<001> orientation in the final product. When the primary recrystallized grains are excessively large, secondary recrystallization becomes unstable, but as long as secondary recrystallization occurs, it is advantageous for magnetism that the primary recrystallized grains are large to increase the secondary recrystallization temperature. Meanwhile, P not only lowers the core loss of the final product by increasing the number of grains having the {110}<001> orientation in the primary recrystallized steel sheet, but also increases magnetic flux density by strongly developing {111}<112> texture in the primary recrystallized sheet, thereby improving the degree of {110}<001> integration in the final product. In addition, P also has an effect of reinforcing the inhibition force by segregating at grain boundaries up to a high temperature of about 1000°C during secondary recrystallization annealing and delaying the decomposition of precipitates. Therefore, when P is further added, it may advantageously act on magnetism. If P is added in too small an amount, the aforementioned effects may not be sufficiently obtained. Conversely, if too much P is added, the size of the primary recrystallized grains may rather decrease, making secondary recrystallization unstable as well as increasing brittleness, which may inhibit cold rollability. Accordingly, P may be included in an amount of 0.01 to 0.04 wt%. More specifically, P may be included in an amount of 0.015 to 0.035 wt%.

### C: 0.01 wt% or less

Carbon (C) is a component that does not significantly contribute to the improvement of magnetic properties of the grain-oriented electrical steel in the embodiment according to the present invention, and thus it is preferable to remove it as much as possible. However, if included at a certain level or more, it has an effect of promoting austenite transformation of the steel during a rolling process to refine a hot-rolled structure during hot rolling, thereby helping to form a uniform microstructure. Therefore, the C content in a slab is preferably 0.03 wt% or more. However, if the C content is excessive, coarse carbides are generated and removal during decarburization becomes difficult, so the C content is preferably 0.08 wt% or less in the slab. Carbon is decarburized through a decarburization annealing process during a manufacturing process of the grain-oriented electrical steel, and C is included in an amount of 0.01 wt% or less in a finally manufactured grain-oriented electrical steel substrate. More specifically, it may be included in an amount of 0.0001 to 0.0050 wt%.

### N: 0.005 to 0.050 wt%

Nitrogen (N) is an element that reacts with Al and the like to refine crystal grains. When these elements are appropriately distributed, they may help to secure an appropriate primary recrystallization grain size by appropriately refining a structure after cold rolling as described above. However, if the content thereof is excessive, the primary recrystallized grains are excessively refined, and as a result, a driving force causing grain growth during secondary recrystallization increases due to the fine grains, so that grains of an undesirable orientation may also grow. In addition, an excessive N content is undesirable because it takes a long time to remove in a final annealing process. Accordingly, the upper limit of the nitrogen content in the slab is 0.005 wt%, and since the content of nitrogen dissolved during slab reheating should be 0.001 wt% or more, the lower limit of the nitrogen content in the slab is preferably 0.001 wt%. Nitrogen is partially permeated through a nitriding annealing process during the manufacturing process of a grain-oriented electrical steel sheet, and N is included in an amount of 0.005 to 0.05 wt% in the finally manufactured grain-oriented electrical steel sheet.

### Sb, Sn, or a combination thereof: 0.01 to 0.15 wt%

Antimony (Sb) and tin (Sn) are grain boundary segregation elements that hinder the movement of grain boundaries, acting as grain growth inhibitors. They promote the formation of {110}<001> oriented Goss grains to facilitate well-developed secondary recrystallization, making them important elements for grain size control. If the content of Sb, Sn, added alone or in combination, is too low, the effectiveness may decrease. If the content of Sb, Sn, added alone or in combination, is too high, severe grain boundary segregation may occur, increasing the brittleness of the steel sheet and potentially causing sheet breakage during rolling. More specifically, Sb may be included in an amount of 0.01 to 0.05 wt%, and Sn may be included in an amount of 0.01 to 0.12 wt%.

The grain-oriented electrical steel sheet substrate may further include at least one of 0.40 wt% or less of copper (Cu), 0.001 wt% or less of sulfur (S), and 0.01 to 0.2 wt% of chromium (Cr).

### Cu: 0.40 wt% or less

Copper (Cu) reacts with S to form Cu₂S precipitates, which serves as an inhibitor to suppress the growth of primary recrystallized grains. When added together with Mn, it forms [MnCu]S complex precipitates, thereby affecting the size of MnS precipitates. If too much Cu is added, it precipitates with S in the steel before Mn, so that fine MnS precipitates intended to be obtained in the present invention may not be obtained. Therefore, it is preferable to limit the Cu content to a range of 0.40 wt% or less. More specifically, the Cu content may be 0.010 to 0.040 wt%.

### S: 0.0010 wt% or less

Sulfur (S) generally reacts with Mn and Cu to form MnS or Cu₂S precipitates, thereby serving as an inhibitor that suppresses growth of primary recrystallized grains. In order to secure fine MnS precipitates, the added Mn and S may effectively serve as an inhibitor when they are capable of completely forming a solid solution under slab heating conditions of 1150°C or lower. Therefore, S is preferably added within a content range that may react with the added amount of Mn. If S is added in an excessive amount, complete solid solution becomes difficult, which may result in the formation of coarse MnS precipitates. In the final grain-oriented electrical steel, S may be included in an amount of 0.0010 wt% or less. More specifically, it may be included in an amount of 0.001 to 0.005 wt%.

### Cr: 0.01 to 0.20 wt%

Chromium (Cr) is an element that reacts with oxygen most rapidly to form Cr₂O₃ on a surface of a steel sheet. Through this, a carbon component in the steel rapidly diffuses to the surface of the steel sheet and reacts with oxygen in an atmospheric gas to form CO gas, thereby promoting decarburization. If Cr is added in too small an amount, the aforementioned effect may not be sufficiently obtained. If Cr is added in too large an amount, it may not significantly affect the formation of a surface oxide layer. Therefore, the Cr content is limited to 0.01 to 0.20 wt%. More specifically, it may be included in an amount of 0.03 to 0.15 wt%.

The remainder includes iron (Fe). It may also include unavoidable impurities. Unavoidable impurities refer to impurities that are inevitably mixed in the steelmaking process and the manufacturing process of the grain-oriented electrical steel sheet. Since unavoidable impurities are widely known, a specific description thereof will be omitted. In one embodiment of the present invention, the addition of elements other than the aforementioned alloy components is not excluded, and various elements may be included within a range that does not depart from the technical spirit of the present invention. When additional elements are further included, they are included by replacing Fe, which is the remainder. For example, it is possible within the component range of the present invention to contain at least one or more components selected from the group consisting of Ni, Mo, Zr, Bi, Pb, As, Ge, and Ga in the steel.

A method for manufacturing a grain-oriented electrical steel sheet according to an embodiment of the present invention comprises: manufacturing a hot-rolled sheet by hot-rolling a steel slab; manufacturing a cold-rolled sheet by cold-rolling the hot-rolled sheet; performing primary recrystallization annealing on the cold-rolled sheet; applying an annealing separator composition on a surface of the primary recrystallization annealed steel sheet; and performing secondary recrystallization annealing on the steel sheet to which the annealing separator composition is applied. In an embodiment of the present invention, effects are exhibited by characteristics of the annealing separator composition and a coating 20, regardless of the method for manufacturing the grain-oriented electrical steel sheet. Supplementally, the method for manufacturing the grain-oriented electrical steel sheet is described as follows.

First, in step S10, a steel slab is hot-rolled. Since the composition of the steel slab has been specifically described with respect to the composition of the aforementioned grain-oriented electrical steel sheet, redundant description will be omitted. Before hot-rolling the steel slab, the steel slab may be heated. In this case, the slab heating may be performed at a temperature of 1,200°C or less by a low-temperature slab method.

Hot rolling may be performed to a thickness of 1.0 to 3.5 mm, and in consideration of a rolling load, the rolling may be finished at a temperature of 850°C or higher, and coiling may be performed after cooling to a temperature of 600°C or lower.

The hot-rolled steel sheet may be configured to be smoothly rolled to a final product thickness in a subsequent cold rolling process by recrystallizing a hot-rolled deformed structure in a subsequent hot-rolled sheet annealing process. Generally, as for the hot-rolled sheet annealing temperature, it is preferable to maintain the temperature for a predetermined period of time by heating to a temperature of 800°C or higher for recrystallization, and annealing by heating at a plurality of temperatures is also possible to control the distribution and size of precipitates. The hot-rolled sheet annealing may be omitted if necessary.

Next, a cold-rolled sheet is manufactured by cold-rolling the hot-rolled sheet.

The hot-rolled sheet is subjected to pickling to remove an oxide layer on the surface of the steel sheet, and then cold rolling is performed. Cold rolling is a process of reducing the thickness of the steel sheet to a final product thickness, and cold rolling is performed once or one or more times including intermediate annealing to roll the steel sheet to the final product thickness. At this time, since the cold rolling reduction ratio enhances the degree of integration of Goss orientation and affects the improvement of magnetic flux density after final secondary recrystallization annealing, the cold rolling may be performed at a rolling reduction ratio of at least 80%. If the cold rolling reduction ratio is too low, the degree of integration of Goss orientation is low, leading to a decrease in the magnetic flux density of the final product. Therefore, the cold rolling reduction ratio is set to at least 80%, and the maximum rolling reduction ratio may be performed up to a maximum rollable range according to the rolling capability of the rolling equipment. In addition, if the sheet temperature of the cold-rolled steel sheet is raised to 50°C or higher during the cold rolling process, secondary recrystallization nuclei of Goss orientation are frequently generated due to work hardening by solute carbon, which may improve the magnetic flux density of the final product. If the temperature of the cold-rolled steel sheet is too low, the generation of secondary recrystallization nuclei of Goss orientation is insignificant, and conversely, if it exceeds 300°C, the work hardening effect by solute carbon is weakened, resulting in weak generation of secondary recrystallization nuclei of Goss orientation. Therefore, in the cold rolling process, the steel sheet may be maintained in a temperature range of 50 to 300°C at least once in an intermediate rolling stage. After cold rolling, the thickness of the cold-rolled sheet may be 0.10 to 0.35 mm.

Next, the cold-rolled sheet is subjected to primary recrystallization annealing. In this case, the step of performing the primary recrystallization annealing of the cold-rolled sheet may include a step of simultaneously performing decarburization annealing and nitriding annealing on the cold-rolled sheet, or a step of performing nitriding annealing after the decarburization annealing.

In the primary recrystallization annealing stage, the soaking temperature may be 820 to 900°C. If the temperature is too low, even if a predetermined amount of oxygen is reached, Fe-based oxides (Fe₂SiO₄ or FeSiO₃), which are important for stable forsterite film formation in terms of oxide quality, may be insufficient or the compactness of the oxide may be insufficient. If the temperature is too high, it is advantageous for the compactness of the oxide film or the formation of Fe-based oxides, but the decarburization property may be degraded by the initially formed oxide. The soaking temperature may consist of two stages, wherein the first soaking temperature may be 830 to 860°C and the second soaking temperature may be 850 to 890°C. In this case, the quality of the oxide may be further improved.

The dew point of the atmosphere during decarburization may be 58 to 70 °C. If the dew point is low, it is difficult for oxidation or decarburization to occur sufficiently. If the dew point is too high, it may become an unstable oxide in a region where FeO is rapidly formed on the outermost surface layer of the oxide film. More specifically, the dew point of the atmosphere during decarburization may be 60 to 68 °C.

Next, an annealing separator is applied on the surface of the steel sheet subjected to primary recrystallization annealing. Since the annealing separator has been described in detail above, repeated descriptions will be omitted.

An application amount of the annealing separator may be 1 to 20 g/m². If the application amount of the annealing separator is too small, a coating may not be smoothly formed. If the application amount of the annealing separator is too large, it may affect secondary recrystallization. Therefore, the application amount of the annealing separator may be adjusted within the aforementioned range. The application amount is based on solid content.

Next, secondary recrystallization annealing is performed on the steel sheet coated with the annealing separator. A coating layer 20 including forsterite is formed during the secondary recrystallization annealing process.

During secondary recrystallization annealing, a first soaking temperature may be 650 to 750 °C, and a second soaking temperature may be 1100 to 1250 °C. In a temperature interval of a heating section between the first soaking and the second soaking, control may be performed at a heating rate condition of 10 to 20 °C/hr. In addition, a gas atmosphere may be maintained as an atmosphere comprising 220 to 30 vol% nitrogen and 70 to 80 vol% hydrogen until the first soaking step, and in the second soaking step, the material may be furnace-cooled after being maintained in a 100% hydrogen atmosphere for 15 hours. Through the aforementioned conditions, a coating 20 may be smoothly formed.

Thereafter, a step of forming a ceramic coating 40 may be further included. Since the ceramic coating 40 has also been specifically described above, a repeated description thereof will be omitted. As a method of forming the ceramic coating 40, a ceramic layer may be formed by spraying ceramic powder onto the coating 20. Specifically, plasma spray coating, high velocity oxy fuel (HVOF) spray coating, aerosol deposition, or cold spray coating methods may be applied. More specifically, a plasma spray coating method may be used, in which a ceramic layer is formed by supplying ceramic powder to a heat source obtained by plasma-generating a gas containing Ar, H₂, N₂, or He at an output of 20 to 300 kW. Additionally, as a plasma spray coating method, the ceramic coating 40 may be formed by supplying a mixture of ceramic powder and a solvent in the form of a suspension to a heat source obtained by plasma-generating a gas containing Ar, H₂, N₂, or He at an output of 20 to 300 kW. In this case, the solvent may be water or alcohol.

In addition, as a method of forming the ceramic coating 40, a method of forming a ceramic layer by applying a ceramic layer forming composition comprising ceramic powder and a metal phosphate may be used.

After the formation of the ceramic coating 40, magnetic domain refinement may be performed as necessary.

Hereinafter, the present invention will be described in more detail through examples. However, these examples are merely for illustrating the present invention, and the present invention is not limited thereto.

### Example 1

A slab was prepared, comprising 3.4 wt% of silicon (Si), 0.03 wt% of aluminum (Al), 0.05 wt% of manganese (Mn), 0.04 wt% of antimony (Sb), 0.09 wt% of tin (Sn), 0.02 wt% of nickel (Ni), 0.06 wt% of carbon (C), and 40 wt ppm of nitrogen (N), with the balance consisting of Fe and other unavoidable impurities.

The slab was heated at 1150°C for 220 minutes and then hot-rolled to a thickness of 2.3 mm to manufacture a hot-rolled sheet.

A cold-rolled sheet was manufactured by heating a hot-rolled sheet to 1120°C, maintaining the sheet at 920°C for 95 seconds, water quenching and pickling the sheet, and then cold rolling the sheet to a thickness of 0.23 mm.

A cold-rolled sheet was put into a furnace maintained at 850°C and then maintained for 180 seconds in a mixed atmosphere of 74 vol% hydrogen, 25 vol% nitrogen, and 1 vol% dry ammonia gas to simultaneously perform decarburization, nitriding, and primary recrystallization annealing, thereby manufacturing a primary recrystallization annealed steel sheet.

An annealing separator composition was prepared in the form of a slurry by mixing the components summarized in Table 1 below, 5 parts by weight of metal hydroxide, 5 parts by weight of ceramic powder, and 5 parts by weight of sulfate with distilled water, the slurry was applied to a primary recrystallization-annealed steel sheet using a roll, and then secondary recrystallization annealing was performed.

During secondary recrystallization annealing, the first soaking temperature was 700°C, the second soaking temperature was 1200°C, and the heating rate in the heating temperature range therebetween was 15°C/hr. In addition, a mixed gas atmosphere of 50 vol% nitrogen and 50 vol% hydrogen was maintained up to 1200°C, and after reaching 1200°C, the temperature was maintained in a 100 vol% hydrogen gas atmosphere for 20 hours, followed by furnace cooling.

The forsterite coating and the forsterite aggregates were analyzed by FIB-SEM cross-sectional analysis and FIB-SEM EDS mapping. The thickness of the forsterite coating and the size and aspect ratio (ratio of the major axis to the minor axis) of the forsterite aggregates were analyzed by the cross-sectional analysis, wherein the forsterite aggregates were distinguished from the base metal by the FIB-SEM EDS mapping. The size of the forsterite aggregates was calculated by image analysis.

Peel adhesion was measured using an ASTM C1624 scratch tester. The scratch tester is a device for evaluating peel adhesion by moving a tip on a specimen while gradually increasing a load to generate a scratch on a surface of the specimen, and then reading the load (N) at a point where delamination of a coating layer occurs (ASTM C1624). The delamination of the coating layer may occur in various forms such as buckling spallation, wedging spallation, recovery spallation, and chipping. Among these, film adhesion was measured based on an initial point where a delamination width due to buckling spallation occurred as wide as a scratch width.

In addition, the peak position was determined by measuring the peak position of the Mg content obtained when performing elemental analysis in the thickness direction of the grain-oriented electrical steel using a glow discharge spectrometer (GDS) analysis method.

The specimens were sheared to an Epstein specimen size [60 mm (width) x 300 mm (length)], and 10 specimens each were collected, after which magnetic flux density (B₈) and iron loss (W_{17/50}) were measured.

The insulation properties were measured on the upper part of the coating using a Franklin tester in accordance with the international standard ASTM A717.

In addition, adhesion is represented by the minimum arc diameter at which peeling of a coating film does not occur when a specimen is bent 180° in contact with an arc of 10 to 100 mm.

**[Table 1]**

| Annealing separator (100 parts by weight of solid content) | | | | | | | |
|---|---|---|---|---|---|---|---|
| No. | nano magnesium compound | | micro magnesium compound | | Metal hydroxide | Ceramic powder | Sulfate |
| | Average particle diameter (nm) | Content (parts by weight) | Average particle diameter (µm) | Content (parts by weight) | | | |
| 1 | 20 | 5 | 5.0 | 80 | Cr | MnO | Sb |
| 2 | 20 | 20 | 5.0 | 65 | Ni | Al₂O₃ | Sr |
| 3 | 20 | 20 | 1.0 | 65 | Co | SiO₂ | Ba |
| 4 | 20 | 20 | 200.0 | 65 | Cu | TiO₂ | Sb |
| 5 | 20 | 80 | 5.0 | 5 | Sr | ZrO₂ | Sr |
| 6 | 100 | 5 | 5.0 | 80 | Ba | MnO | Ba |
| 7 | 100 | 80 | 5.0 | 5 | Pd | Al₂O₄ | Sb |
| 8 | 200 | 5 | 5.0 | 80 | In | SiO₃ | Sr |
| 9 | 200 | 80 | 5.0 | 5 | Bi | TiO₃ | Ba |
| 10 | 1 | 20 | 5.0 | 65 | Cr | ZrO₃ | Sb |
| 11 | 600 | 20 | 5.0 | 65 | Ni | MnO | Sr |
| 12 | 20 | 3 | 5.0 | 82 | Co | Al₂O₃ | Ba |
| 13 | 20 | 82 | 5.0 | 3 | Cu | SiO₂ | Sb |
| 14 | 20 | 20 | 0.8 | 65 | Sr | TiO₂ | Sr |
| 15 | 20 | 20 | 300.0 | 65 | Ba | ZrO₄ | Ba |
| 16 | 20 | 82 | 5.0 | 3 | Pd | MnO | Sb |
| 17 | - | - | 5.0 | 85 | In | Al₂O₆ | Sr |

**[Table 2]**

| No. | Forsterite coating | | | Forsterite aggregate | |
|---|---|---|---|---|---|
| | Thickness (µm) | Peak position (µm) | Oxidation amount (ppm) | Total area (µm²) | Average area (µm²) |
| 1 | 2.8 | 0.9 | 925 | 6.5 | 0.3 |
| 2 | 3.2 | 1.0 | 950 | 7.5 | 0.1 |
| 3 | 3.1 | 1.0 | 1000 | 7.3 | 0.5 |
| 4 | 2.2 | 0.9 | 1050 | 7.0 | 0.6 |
| 5 | 1.5 | 0.8 | 1100 | 6.5 | 1.2 |
| 6 | 1.4 | 0.7 | 1000 | 5.3 | 0.8 |
| 7 | 2.1 | 0.8 | 1000 | 3.7 | 0.5 |
| 8 | 1.6 | 0.7 | 1000 | 4.8 | 0.3 |
| 9 | 1.7 | 0.7 | 1000 | 3.2 | 0.9 |
| 10 | 1.5 | 0.7 | 1000 | 3.9 | 0.7 |
| 11 | 0.9 | 0.6 | 1000 | 2.5 | 1.5 |
| 12 | 0.8 | 0.5 | 1000 | 3.5 | 1.3 |
| 13 | 1.1 | 0.5 | 1000 | 2.5 | 0.9 |
| 14 | 1.2 | 0.6 | 1000 | 2.2 | 0.8 |
| 15 | 0.9 | 0.5 | 1000 | 1.5 | 1.5 |
| 16 | 0.8 | 0.5 | 1000 | 2.7 | 2.7 |
| 17 | 1.1 | 0.5 | 1000 | 2.8 | 1.3 |

**[Table 3]**

| No. | Coating adhesion (ASTM C1624, N) | Insulation (ASTM A717, mA) |
|---|---|---|
| 1 | 6 | 0.32 |
| 2 | 8 | 0.51 |
| 3 | 7 | 0.57 |
| 4 | 8 | 0.25 |
| 5 | 6 | 0.43 |
| 6 | 5 | 0.47 |
| 7 | 7 | 0.35 |
| 8 | 7 | 0.58 |
| 9 | 6 | 0.61 |
| 10 | 8 | 0.47 |
| 11 | 3 | 0.57 |
| 12 | 3 | 0.67 |
| 13 | 4 | 0.64 |
| 14 | 2 | 0.48 |
| 15 | 1 | 0.75 |
| 16 | 3 | 0.73 |
| 17 | 2 | 0.52 |

As shown in Table 1 to Table 3, in the case of Nos. 1 to 10 in which the components of the annealing separator composition were appropriately controlled, forsterite aggregates were appropriately formed, and it may be confirmed that coating adhesion, magnetic properties, and insulation properties are simultaneously excellent.

On the other hand, in a case where the components of the annealing separator composition are not appropriately included, it may be confirmed that coating adhesion, magnetic properties, or insulation properties are partially inferior.

The present invention is not limited to the above-described embodiments and/or examples, but may be implemented in various different forms, and those of ordinary skill in the art to which the present invention pertains may understand that the present invention may be practiced in other specific forms without departing from the technical spirit or essential features of the present invention. Therefore, it should be understood that the embodiments and/or examples described above are illustrative in all respects and not restrictive.

**[Description of symbols]**

| | |
|---|---|
| 100: Grain-oriented electrical steel sheet, | 10: Grain-oriented electrical steel sheetsubstrate, |
| 20: coating, | 30: forsterite aggregates, |
| 40: Ceramic coating | |

## Claims

1. An annealing separator composition comprising:
5 to 80 parts by weight of a nano magnesium compound having a particle size of less than 0.8 µm and an average particle diameter of 1 to 200 nm, and
5 to 80 parts by weight of a micro magnesium compound having a particle size of 0.8 µm or more and an average particle diameter of 1 to 200 µm,
wherein the magnesium compound comprises at least one of magnesium oxide and magnesium hydroxide.

2. The annealing separator composition of claim 1,
wherein the magnesium compound is included in an amount of 50 to 95 parts by weight based on 100 parts by weight of a total solid content of the annealing separator.

3. The annealing separator composition of claim 1,
wherein the weight ratio of the nano magnesium compound to the micro magnesium compound is 5:80 to 60:25.

4. The annealing separator composition of claim 1,
further comprising at least one of a metal hydroxide, a ceramic powder, and a sulfate compound.

5. A grain-oriented electrical steel sheet comprising:
a grain-oriented electrical steel sheet substrate and
a coating disposed on one side or both sides of the grain-oriented electrical steel sheet substrate and comprising forsterite,
wherein in a cross-sectional area having a width of 25 µm including the steel sheet width and thickness directions, a total area of forsterite aggregates independent from an interface between a coating and a substrate is 3.2 to 7.5 µm², and an average area of the forsterite aggregates is 0.1 to 1.2 µm².

6. The grain-oriented electrical steel sheet of Claim 5,
wherein total area of the forsterite aggregate is 4.0 to 6.5 µm².

7. The grain-oriented electrical steel sheet of Claim 5,
wherein average area of the forsterite aggregates is 0.2 to 0.9 µm².

8. The grain-oriented electrical steel sheet of Claim 5,
wherein number ratio of forsterite aggregates having a ratio of the minor axis to the major axis of 0.5 or more among the forsterite aggregates is 0.38 to 0.95.

9. The grain-oriented electrical steel sheet of Claim 5,
wherein the forsterite aggregate is present in a region of 2 to 5 µm in the thickness direction of the steel sheet from the coating surface.

10. The grain-oriented electrical steel sheet of Claim 5,
wherein peak position of Mg content obtained when elemental analysis is performed by a Glow Discharge Spectrometer (GDS) analysis method in the thickness direction of the grain-oriented electrical steel sheet from the coating surface is formed at 0.7 to 1.0 µm in the thickness direction of the grain-oriented electrical steel sheet from the coating surface.

11. The grain-oriented electrical steel sheet of Claim 5,
wherein having an oxidation amount of 925 to 1100 ppm.

12. The grain-oriented electrical steel sheet of Claim 5,
wherein the coating has a peel adhesion of 5 to 8 N as measured by an ASTM C1624 scratch tester.

13. The grain-oriented electrical steel sheet of Claim 5,
wherein the grain-oriented electrical steel sheet substrate comprises 2.0 to 7.0 wt% of silicon (Si), 0.020 to 0.040 wt% of aluminum (Al), 0.01 to 0.20 wt% of manganese (Mn), 0.01 to 0.15 wt% of phosphorus (P), 0.01 wt% or less (excluding 0%) of carbon (C), 0.005 to 0.05 wt% of nitrogen (N), and 0.01 to 0.15 wt% of antimony (Sb), tin (Sn), and a combination thereof, with the balance being iron (Fe) and other unavoidable impurities.

14. The grain-oriented electrical steel sheet of Claim 5,
wherein the grain-oriented electrical steel sheet substrate further comprises at least one of 0.40 wt% or less of copper (Cu), 0.001 wt% or less of sulfur (S), and 0.01 to 0.2 wt% of chromium (Cr).

15. A method for manufacturing a grain-oriented electrical steel sheet comprising the steps of:
hot rolling a steel slab to manufacture a hot-rolled sheet;
cold rolling the hot-rolled sheet to manufacture a cold-rolled sheet;
performing primary recrystallization annealing on the cold-rolled sheet;
applying an annealing separator composition on a surface of the primary recrystallization annealed steel sheet; and
performing secondary recrystallization annealing on the steel sheet on which the annealing separator composition is applied,
wherein the annealing separator composition comprises 5 to 80 parts by weight of a nano magnesium compound having a particle size of less than 0.8 µm and an average particle diameter of 1 to 200 nm, and 5 to 80 parts by weight of a micro magnesium compound having a particle size of 0.8 µm or more and an average particle diameter of 1 to 200 µm, wherein the magnesium compound includes at least one of magnesium oxide and magnesium hydroxide.

16. The method for manufacturing a grain-oriented electrical steel sheet of Claim 15,
wherein the primary recrystallization annealing step is performed at a dew point of 58 to 70 °C.

17. The method for manufacturing a grain-oriented electrical steel sheet of Claim 15,
wherein the secondary recrystallization annealing step comprises a first soaking stage having a soaking temperature of 650 to 750 °C and a second soaking stage having a soaking temperature of 1100 to 1250 °C, and
wherein heating is performed at a heating rate of 10 to 20 °C/hr between the first soaking stage and the second soaking stage.
